# EUROPÄISCHE PATENTSCHRIFT

(11) **EP 1 175 047 B1**
(45) Veröffentlichungstag und Bekanntmachung des Hinweises auf die Patenterteilung: **02.05.2007**
(21) Anmeldenummer: 01116138.7
(22) Anmeldetag: 03.07.2001
(51) Int. Cl.: H04L 12/56

(54) **Verfahren und Anordnung zum Schutz gegen Paketverlusten bei einer paketorientierten Datenübertragung**
Method and apparatus to protect against packet loss in a packet oriented data transmission
Procédé et dispositif pour protéger contre la perte des paquets dans une transmission des données par paquets

(30) Priorität: 14.07.2000 DE 10034261
(43) Veröffentlichungstag der Anmeldung: 23.01.2002
(73) Patentinhaber: SIEMENS AKTIENGESELLSCHAFT, 80333 München (DE)
(72) Erfinder: Burkert, Frank, Dr., 80796 München (DE); Kutka, Robert, Dr., 82269 Geltendorf (DE); Weng, Wenrong, 81827 Munchen (DE)

(56) Entgegenhaltungen:
- US-A- 4 161 719
- US-A- 6 141 788
- ROSENBERG J ET AL: "An RTP Payload Format for Generic Forward Error Correction" INTERNET SOCIETY, NETWORK NETWORKING GROUP, Dezember 1999 (1999-12), XP002185476 Gefunden im Internet: <URL:ftp://ftp.isi.edu/in-notes/rfc2733.tx t> [gefunden am 2001-12-12]
- ROSENBERG J ET AL: "An RTP Payload Format for Reed Solomon Codes" IETF INTERNET ENGINEERING TASK FORCE, 3. November 1998 (1998-11-03), XP002242077 Gefunden im Internet: <URL:http://www.ietf.org/proceedings/99jul /i-d/draft-ietf-avt-reedsolomon- 00.txt> [gefunden am 2003-05-20]
- PERKINS C, KOUVELAS I, HODSON O ET AL: "RTP Payload for Redundant Audio Data (RFC2198)" IETF INTERNET ENGINEERING TASK FORCE, [Online] September 1997 (1997-09), XP002259979 Gefunden im Internet: <URL:http://WWW.ietf.org/rfc/rfc2198.txt?n umber=2198> [gefunden am 2003-10-31]

## Beschreibung

Die Erfindung betrifft ein Verfahren und eine Anordnung zum Schutz von Paketverlusten bei einer paketorientierten Übertragung von Daten bei der insbesondere die Größe der Datenpakete, wie dies beispielsweise bei Videodaten der Fall ist, stark variiert, wobei solche Paketverluste in Festnetzen vor allem durch Überlast an Netzknoten und bei mobilen Kanälen aufgrund von atmosphärischen Störungen und Mehrwegeausbreitung verursacht werden.

Die zur Zeit am weitesten verbreiteten Protokolle auf der Transportebene (Layer 4) UDP und TCP reagieren sehr kritisch auf Bitfehler in empfangenen Paketen. Sobald ein Bitfehler innerhalb eines Paket durch einen fehlererkennenden Code detektiert wird, wird das betroffene Paket verworfen oder ausgelöscht (Erasure). In anderen Worten, es tritt ebenfalls ein Paketverlust auf. Sogenannte Reliable Transport Protocols wie TCP verwenden Wiederholmechanismen (Automatic Repeat Request Verfahren) um verloren gegangene oder verworfene Pakete trotz gestörter Kanäle sicher zum Empfänger transportieren zu können. Dies ist jedoch mit einem sehr großen Zuwachs an Übertragungsverzögerung (Delay) verbunden, was aber von vielen Applikationen nicht toleriert werden kann (zum Beispiel Kommunikationsanwendungen). Hier kommen deshalb Unreliable Transport Protocols, zum Beispiel UDP, zum Einsatz. Diese verursachen zwar keinen Zuwachs an Delay, bieten aber auch keinerlei Mechanismen um Paketverluste auszugleichen. Deshalb gibt es in der Audio-Visual Transport Group (AVT) der IETF seit einiger Zeit intensive Bestrebungen Verfahren zur Vorwärtsfehlerkorrektur (FEC) und paketorientierte Übertragung mit Unreliable Transport Protocols zu verbinden. Diese Verfahren [1], [2], deren Prinzip im folgenden Abschnitt kurz vorgestellt wird, sind vor allem bei Datenquellen mit variabler Bitrate, zum Beispiel Video, sehr ineffizient bezüglich der benötigten Bandbreite.

Bei Paketverlusten werden die Daten nicht verfälscht, sondern gehen komplett verloren und es entstehen sogenannte Auslöschungen (Erasures) [3]. Da jedes paketorientierte Transportprotokoll Sequenznummern verwendet, weiß der Empfänger, welche Pakete in einer Sequenz verloren gegangen sind. Die Codierungstheorie bietet eine Vielzahl von Verfahren zur Bekämpfung von Erasures an. Die IETF (http://www.ietf.org/), die maßgeblich für die Standardisierung IP-basierter Transportprotokolle ist, hat seit kurzem eine rege Aktivität entwickelt, Verfahren zum Schutz gegen Paketverluste in ihre Real-Time-Transportprotokolle (RTP) zu integrieren, zum Beispiel [1], [2]. Diese Verfahren verwenden zwar bezüglich der Codierung eine Reihe verschiedener Codes, jedoch ist das zugrunde liegende Prinzip in allen Ansätzen gleich. Im Sender werden jeweils n, n=1 aufeinanderfolgende Datenpakete der Quelle gegen Auslöschungen geschützt. Sobald ein Datenpaket von der Quelle kommt, wird es in einen Speicher kopiert. Ist das n-te Paket verfügbar, wird die Codierung durchgeführt. Da die im Speicher befindlichen Datenpakete im Allgemeinen unterschiedlich groß sein können, werden sie zunächst auf die gleiche Größe gebracht. Dazu wird die Länge, also die Anzahl der Bytes in einem Datenpaket, des größten Datenpakets bestimmt und alle kürzeren Pakete werden durch Hinzufügen bekannter Bits oder Symbole, zum Beispiel durch Nullen, auf diese Länge expandiert. Diesen Vorgang bezeichnet man Padding. Danach werden die jetzt gleich großen Pakete mit Hilfe einer Codiervorschrift eines beliebigen systematischen Codes miteinander verknüpft. Dabei kann es sich sowohl um einfache Parity-Codes, als auch um komplexe Blockcodes handeln [1], [2]. Genauso kann die Codierung auf Bitebene oder bei entsprechender Segmentierung auf Symbolebene durchgeführt werden. Aus der Verknüpfung entstehen je nach Codierungsvorschrift eine Anzahl von Redundanzpaketen, die dann zusammen mit den Datenpaketen entsprechend der verwendeten Transport- und Netzwerkprotokolle an den Empfänger gesendet werden. Diese Redundanzpakete ermöglichen dem Empfänger die Nutzdaten eventuell verloren gegangene Pakete zu rekonstruieren. Variieren die Datenpakete, wie es zum Beispiel bei Videodaten der Fall ist, stark in ihrer Größe, müssen durch das Padding sehr viele Symbole in den Datenpaketen übertragen werden, die absolut redundant sind, wodurch die Codierung extrem ineffizient im Hinblick auf eine ökonomische Nutzung des Übertragungskanals ist.

In [1] wird ein Verfahren zum Schutz gegen Paketverluste bei einer paketorientierten Datenübertragung offenbart, bei dem zur gleichen Zeit ein Strom aus unveränderten Datenpaketen und ein Strom aus speziell erzeugten FEC-(Forward-Error-Correction)-Paketen übertragen wird. Dabei wird senderseitig ein Padding vorgenommen, um aus Datenpaketen FEC-Pakete mit einer Paketlängeninformation über die enthaltenen Datenpakete zu erzeugen. Empfängerseitig werden verloren gegangene Datenpakete rekonstruiert, indem an dazu nötigen Datenpaketen ein Padding durchgeführt wird und sie dann mit passenden FEC-Paketen verknüpft werden.

Aus C.Perkins et al., "RTP Payload for Redundant Audio Data (RFC2198)", IETF Internet Engineering Task Force ist ein Block Length Headerfeld bekannt, mit der die Paketlängeninformation transportiert wird.

Werden beispielsweise n=5 Datenpakete mit den Längen 200, 400, 800, 500 und 600 Bytes verwendet und drei Redundanzpakete erzeugt, so ist die maximale Länge 800 Bytes und zum Padding werden also insgesamt 1500 Byte benötigt, die ohne Nutzen für den Fehlerschutz und für die Quellendecodierung übertragen werden müssen.

Die der Erfindung zugrunde liegende Aufgabe besteht nun darin, ein Verfahren bzw. eine Anordnung anzugeben, mit deren Hilfe die oben genannten Nachteile vermieden werden.

Diese Aufgabe wird hinsichtlich des Verfahren durch die Merkmale des Patentanspruchs 1 und hinsichtlich der Anordnung durch die Merkmale des Patentanspruchs 3 gelöst. Vorteilhafte Ausgestaltungen der Erfindung ergeben sich aus den weiteren Ansprüchen.

Die Erfindung besteht im Wesentlichen darin, dass einzelne Datenpakete zusammen mit Informationen über das Ende eines jeweiligen Datenpaketes ohne Padding übertragen werden und nachher ein virtuelles Padding zur Erzeugung der Redundanzpakete erfolgt. Empfängerseitig werden die Datenpakete durch die Informationen über das jeweilige Paketende gewonnen, sofern kein Paket verloren ging, und nur dann durch Padding expandiert, wenn ein Paket verloren ging und durch ein oder mehrere Redundanzpakete rekonstruiert werden kann.

Zur näheren Erläuterung eines Ausführungsbeispiels der Erfindung sind senderseitig Datenpakete DP und Redundanzpakete RP und empfängerseitig Datenpakete DP' und Redundanzpakete RP' gezeigt, wobei die Datenpakete DP und Redundanzpakete RP, RP' alle die gleiche maximale Länge L aufweisen und die Datenpakete DP aus ankommenden Datenpaketen D, aus einer Paket-Ende-Information in Form eines Flagbytes F und aus Füllinformation P bestehen und bei den Datenpaketen DP' die Füllinformation P fehlt, da die Füllinformation P erst nach der Übertragung der Datenpakete DP' senderseitig durch sogenanntes virtuelles Padding erfolgt. Die Paket-Ende-Information muß nicht unbedingt ein Byte lang sein, sondern kann auch eine andere Wortbreite aufweisen.

Die eintreffenden Datenpakte D werden auch hier zunächst senderseitig in einen Speicher kopiert. Direkt nach dem Kopiervorgang wird das Datenpaket D um ein Flagbyte F, zum Beispiel eine führende 1, zum Datenpaket DP erweitert und dann sofort übertragen, wobei es aber selbst als Kopie noch im Speicher verbleibt. Sind wieder n Datenpakete DP im Speicher verfügbar, wird die Codierung wie oben beschrieben durchgeführt, das heißt inklusive Padding, das jetzt aber zwingend mit bekannten Fülldaten P, zum Beispiel mit Nullen, durchgeführt wird. Wesentlich ist dabei, dass das Padding hier aber erst nach der Übertragung der Datenpakete vorgenommen wird, wodurch man von einem virtuellen Padding sprechen kann. Die Redundanzpakete RP haben nach der Codierung weiterhin die gleiche Größe L wie das längste Datenpaket DP.

Gehen keine Pakete bei der Übertragung verloren, entfernt der Empfänger aus jedem empfangenen Datenpaket DP' einfach das Flagbyte F, beispielsweise also die führende 1, und erhält sofort die ursprünglichen Datenpakete D.

Gehen ein oder mehrere Pakete, gleich ob Daten- oder Redundanzpaket, verloren, führt der Empfänger vor der Decodierung ebenfalls ein virtuelles Padding durch, das heißt es werden alle Datenpakete DP' zum Beispiel durch Hinzufügen von Nullen auf die gleiche Länge L gebracht, sofern das aufgetretene Erasure-Muster korrigierbar ist und damit diese Länge bekannt ist. Geht ein Datenpaket verloren, wird zumindest ein Redundanzpaket RP' für die Rekonstruktion benötigt, wobei die Länge der Redundanzpakete der Länge L des längsten Datenpakets entspricht.

Nach der Decodierung haben die rekonstruierten Datenpakete die Länge des längsten Datenpakets, da die Padding-Bits enthalten sind. Diese können aber leicht entfernt werden, indem aus jedem Paket die Fülldaten und das Flagbyte entfernt werden. Damit haben die Datenpakete DP wieder ihre ursprüngliche Größe. Durch das virtuelle Padding ist die Übertragung wesentlich effizienter, ohne dass dabei der Schutz gegen Paketverluste verringert wird. Im Vergleich zum obigen Beispiel müssen so 1492 Bytes weniger übertragen werden. Dies führt vor allem bei drahtloser Übertragung zu einer wesentlich effizienteren Ausnutzung der wertvollen Ressource Bandbreite.

In einem weiteren Ausführungsbeispiel wird das virtuelle Padding über Felder im Header signalisiert. Dabei wird die Länge des größten Pakets im Header eines jedes Pakets übertragen und es kann auf ein Flagbyte, wie zum Beispiel einer führenden 1, verzichtet werden. Durch dieses Ausführungsbeispiel der Erfindung kann zwar ebenfalls auf eine Übertragung nutzloser Bytes verzichtet werden, aber es müssen dafür mehrere Nachteile gegenüber dem ersten Ausführungsbeispiel in Kauf genommen werden. Zum einen werden zur Signalisierung der Länge mindestens zwei Bytes anstelle von einem Flagbyte und zum anderen eine Verzögerung im Encoder verursacht, da nun auf alle n Datenpakete gewartet werden muss, bis mit der Übertragung begonnen werden kann, weil vor der Übertragung die Länge des längsten Datenpakets erst ermittelt werden muss. Bei einer Streaming Application bedeutet das zusätzlichen Speicheraufwand. Ebenfalls ist eine Integration in bestehende Payload-Formate schwerer möglich, da bereits standardisierte Header erweitert werden müssen.
[1] IETF RFC 2733 - An RTP Payload Format for Generic Forward Error Correction, J. Rosenberg and H. Schulzrinne
[2] IETF Internet Draft - An RTP Payload Format for Reed Solomon Codes, J. Rosenberg and H. Schulzrinne
[3] Shu Lin und Daniel Costello, "Error Control Coding", Prentice-Hall, 1983

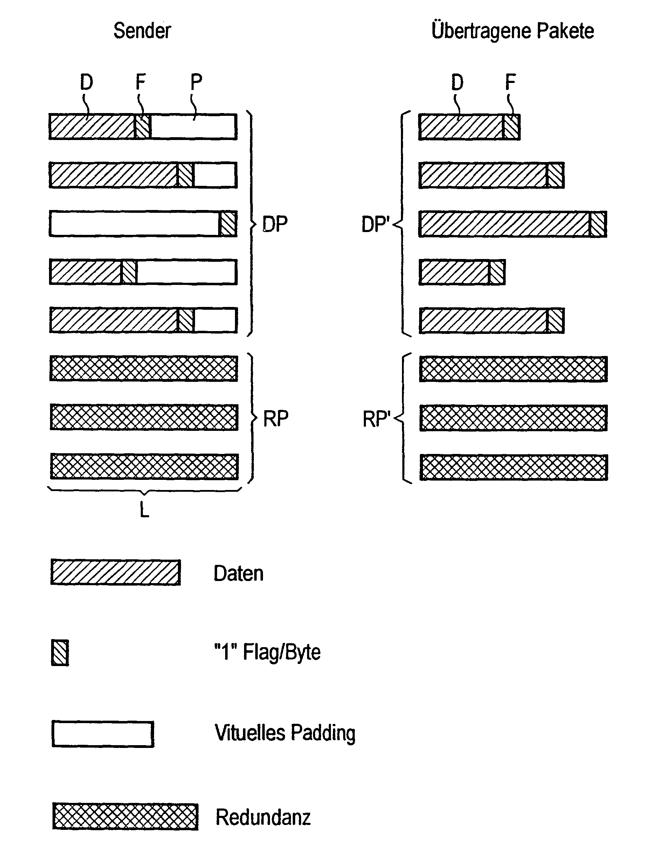

## Patentansprüche

1. Verfahren zum Schutz gegen Paketverluste bei einer paketorientierten Datenübertragung nach dem Real-Time-Transportprotokoll,
bei dem zunächst n Datenpakete (D) zusammen mit einer Paket-Ende-Information in einen Speicher kopiert werden,
bei dem in jedem zu übertragenden Datenpaket eine Paket-Ende-Information des jeweiligen Paketes mitübertragen wird,
bei dem nach der Übertragung der Datenpakete senderseitig durch Auffüllen des gespeicherten Datenpakets mit bekannten Fülldaten (P) in n gleich große Datenpakete (DP) mit der Länge (L) des größten der n Datenpakete (DP) umgewandelt und durch Codierung Redundanzpakete (RP, RP') erzeugt und übertragen werden,
bei dem, sofern kein Datenpaket (DP') bei der Übertragung verloren ging, aus den übertragenen Paketen und der Paket-Ende-Information die n Datenpakete (D) gewonnen werden und bei dem, sofern wenigstens ein oder mehrere Datenpakete (DP') bei der Übertragung verloren gingen und dieser Fehler korrigierbar ist, alle übertragenen Datenpakete (DP') empfängerseitig durch Auffüllen mit bekannten Daten (P) zu gleich großen Datenpaketen mit der Länge (L) des größten der n Datenpakete (DP') umgewandelt und bei dem das oder die verloren gegangenen Datenpakete (DP') mit Hilfe eines oder mehrerer der Redundanzpakete (RP') rekonstruiert werden sowie aus den gleich großen Datenpaketen und der Paket-Ende-Information die n Datenpakete (D) gewonnen werden, **dadurch gekennzeichnet, dass** die Paket-Ende-Information in Form eines Flag-Byte (F) an das Ende eines jeden Datenpakets (D) angefügt wird.

2. Verfahren nach Anspruch 1,
bei dem, sofern kein Datenpaket (DP') verloren ging, die Daten durch Entfernen des Flag-Bytes (F) gewonnen werden und bei dem, sofern ein oder mehrere Datenpakete (DP') verloren gingen und dieser Fehler korrigierbar ist, aus den rekonstruierten Datenpaketen durch Entfernen des Flag-Bytes (F) und eventuell folgender Fülldaten (P) die Daten gewonnen werden.

3. Anordnung zum Schutz gegen Paketverluste bei einer paketorientierten Datenübertragung nach dem Real-Time-Transportprotokoll, bei der in einem Sender eine Einrichtung zur Bildung und Übertragung von Paket-Ende-Informationen derart vorhanden ist, dass Datenpakete (DP) mit Paket-Ende-Informationen bereits vor der Erzeugung von Redundanzpaketen (RP) gesendet werden, und
bei der in einem Empfänger eine Einrichtung zum Empfang und zur Entfernung von Paket-Ende-Informationen derart vorhanden ist, dass die Datenpakete (DP') vor der Entfernung der Paket-Ende-Information nur dann mit Hilfe der Füllinformation (P) zu gleich langen Datenpaketen expandiert werden, wenn ein oder mehrere Datenpakete bei der Übertragung verloren gingen und dieser Fehler rekonstruierbar ist, **dadurch gekennzeichnet, dass** die Paket-Ende-Information in Form eines Flag-Byte (F) an das Ende eines jeden Datenpakets (D) anfügbar ist.

## Claims

1. Method for protecting against packet losses in packet-oriented data transmission using the real time transport protocol,
wherein firstly n data packets (D) are copied into a memory together with end-of-packet information,
wherein with each data packet to be transmitted an end-of-packet information of the respective packet is also transmitted,
wherein, after the transmission of the data packets, at the transmitter end, by filling the stored data packet with known padding data (P) into n equally large data packets (DP) having the length (L) of the longest one of the n data packets (DP), redundant packets (RP, RP') are generated by coding and transmitted,
wherein, if no data packet (DP') has been lost during the transmission, the n data packets (D) are obtained from the transmitted packets and the end-of-packet information and
wherein, if at least one or more data packets (DP') have been lost during the transmission and this error is correctable, all transmitted data packets (DP') are converted at the receiver end into equally large data packets having the length (L) of the longest one of the n data packets (DP') by filling them with known data (P), and wherein the lost data packet or packets (DP') are reconstructed using one or more of the redundant packets (RP'), and the n data packets (D) are obtained from the equally large data packets and the end-of-packet information, **characterized in that** the end-of-packet information is appended to the end of each data packet (D) in the form of a flag byte (F).

2. Method according to claim 1, in which, if no data packet (DP') has been lost, the data are obtained by removing the flag byte (F) and in which, if one or more data packets (DP') have been lost and this error is correctable, the data are obtained from the reconstructed data packets by removing the flag byte (F) and any subsequent padding data (P).

3. Arrangement for protecting against packet losses in packet-oriented data transmission on the basis of the real time transport protocol, in which a device for forming and transmitting end-of-packet information is provided in a transmitter in such a manner that data packets (DP) with end-of-packet information are transmitted even before redundant packets (RP) are generated, and in which the receiver is provided with a device for receiving and for removing end-of-packet information in such a manner that the data packets (DP'), before the end-of-packet information is removed, are only expanded with the aid of padding information (P) to form equally long data packets if one or more data packets have been lost during transmission and this error can be reconstructed, **characterized in that** the end-of-packet information is appendable to the end of each data packet (D) in the form of a flag byte (F).

## Revendications

1. Procédé de protection contre des pertes de paquets dans une transmission de données orientée paquet selon le protocole de transport en temps réel, dans lequel d'abord n paquets de données (D) sont copiés ensemble avec une information sur la fin de paquet dans une mémoire, dans lequel une information sur la fin de paquet du paquet concerné est transmise également dans chaque paquet de données à transmettre, dans lequel, après la transmission des paquets de données, on convertit côté expéditeur par le remplissage du paquet de données stocké avec des données de remplissage (P) connues en n paquet de données (DP) de grandeur identique avec la longueur (L) du plus grand des n paquets de données (DP) et des paquets de redondance (RP, RP') sont générés et transmis par codage, dans lequel, dans la mesure où aucun paquet de données (DP') n'a été perdu lors de la transmission, les n paquets de données (D) sont obtenus à partir des paquets transmis et de l'information sur la fin de paquet et dans lequel, dans la mesure où au moins un ou plusieurs paquets de données (DP') se sont perdus lors de la transmission et où cette erreur est corrigible, tous les paquets de données (DP') transmis sont convertis côté destinataire par le remplissage avec des données (P) connues en paquets de données de grandeur identique présentant la longueur (L) du plus grand des n paquets de données (DP') et dans lequel le ou les paquets de données (DP') perdus sont reconstitués à l'aide d'un ou de plusieurs des paquets de redondance (RP') et les n paquets de données (D) sont obtenus à partir des paquets de données de grandeur identique et de l'information sur la fin de paquet, **caractérisé en ce que** l'information sur la fin de paquet est ajoutée sous forme d'un flag-byte (F) à la fin de chaque paquet de données (D).

2. Procédé selon la revendication 1, dans lequel, dans la mesure où aucun paquet de données (DP')n'a été perdu, les données sont obtenues par l'enlèvement du flag-byte (F) et dans lequel, dans la mesure où un ou plusieurs paquets de données (DP') se sont perdus et cette erreur est corrigible, les données sont obtenues à partir des paquets de données reconstitués par l'enlèvement du flag-byte (F) et d'éventuelles données de remplissage (P) suivantes.

3. Agencement de protection contre des pertes de données dans une transmission de données orientée paquet selon le protocole de transport en temps réel, dans lequel un dispositif pour la formation et la transmission d'informations sur la fin de paquet est présent dans un émetteur de telle sorte que des paquets de données (DP) sont envoyés avec des informations sur la fin de paquet déjà avant la génération de paquets de redondance (RP) et dans lequel, chez un destinataire, un dispositif pour la réception et pour l'enlèvement d'informations sur la fin de paquet est présent de telle sorte que les paquets de données (DP') sont seulement étendus avant l'enlèvement de l'information sur la fin de paquet à l'aide de l'information de remplissage (P) pour former des paquets de données de longueur identique si un ou plusieurs paquets de données se sont perdus lors de la transmission et cette erreur est reconstituable, **caractérisé en ce que** l'information sur la fin de paquet se présentant sous la forme d'un flag-byte (F) peut être ajoutée à la fin de chaque paquet de données (D).
